Europäisches Patentamt

European Patent Office

Office européen des brevets

(11) Publication number: **0 236 405 B1**

# EUROPEAN PATENT SPECIFICATION

(45) Date of publication of patent specification: **28.11.90**

(21) Application number: **86905347.0**

(22) Date of filing: **04.09.86**

(86) International application number:
**PCT/GB86/00526**

(87) International publication number:
**WO 87/01445 12.03.87 Gazette 87/06**

(51) Int. Cl.⁵: **G 01 F 1/90, G 01 F 1/74, G 01 F 3/00**

(54) **APPARATUS AND PROCESS FOR MEASURING MULTI-PHASE MASS FLUID FLOW.**

(30) Priority: **04.09.85 GB 8521970**

(43) Date of publication of application:
**16.09.87 Bulletin 87/38**

(45) Publication of the grant of the patent:
**28.11.90 Bulletin 90/48**

(84) Designated Contracting States:
**BE DE FR GB IT NL SE**

(56) References cited:
**FR-A-2 325 025**
**US-A-4 272 982**

(73) Proprietor: **The British Petroleum Company p.l.c.**
**Britannic House Moor Lane**
**London EC2Y 9BU (GB)**

(72) Inventor: **GOLD, Roy, Charles**
**24 Winn Road Lee**
**London SE12 9ET (GB)**

(74) Representative: **Ryan, Edward Terrence et al**
**BP INTERNATIONAL LIMITED, Patents Division**
**Chertsey Road**
**Sunbury-on-Thames Middlesex, TW16 7LN (GB)**

## Description

The present invention relates to the measurement of multi-phase flow. It is often important to know the total mass flow of a fluid stream containing more than one phase, for example one containing two or more liquid phases and/or liquid gas phases.

Thus in crude oil production the fluid at the wellhead may comprise a combination of crude oil, water, and gas (either dissolved or as a separate phase).

In multiwell crude oil production systems it is often necessary to apportion the total production on a per well basis. Therefore measurement of total mass flow from each individual well is required. At present the total volumetric flow is usually obtained indirectly from a knowledge of the pressure measured upstream of the choke, and the choke size. Well tests are performed to obtain gas/oil ratios and samples are taken from laboratory analysis to ascertain water content and phase densities. The mass flow of each phase may then be calculated.

FR-A-2 325 025 discloses a device with three different single screws on a common shaft. Two different chambers are provided and multi-phase mass flow is measured by causing variations in the volume until the pressure or volume reach a pre-determined value. The method of determining mass flow involves calculation of the composition of the fluid rather than a direct density determination.

These techniques are imprecise and a more direct method of measuring multiphase mass flow is desirable. US 4 272 982 discloses a multiphase flow meter for measuring the flow of a fluid containing both liquid and gas components. The meter comprises a structure corresponding to a sliding vane positive displacement meter together with a gamma ray densitometer for determining the density of a segment of the flow trapped between two sliding vanes. The use of a rotating cylinder with sliding vanes is convenient in that interphase velocity slippage is prevented and a clear path is provided for the gamma rays from one side of the device to the other except for the very short time during which a vane passes between the gamma ray source and detector. However the fluid enters the positive displacement device along an axis at right angles to the rotation of the cylinder and thus impinges directly on the sliding blades. The fluid may contain pockets or "slugs" of gas and of liquid and the consequent transient forces acting on the blades may be high, leading to damage to the blades, which may distort to prevent them sliding within the rotating cylinder.

It is therefore desirable to provide an apparatus for measuring multiphase flow which is capable of greater robustness.

The present invention provides an apparatus for the measurement of multiphase mass flow of a fluid comprising a positive displacement means (1a, 1b) for feeding controlled volumes of fluid to a chamber (2), said chamber having associated therewith a radiation densitometer (4), for determining the average density of the fluid in the chamber, characterised in that the positive displacement means comprises a first axial flow displacement device (1a) comprising two double helical rotors for feeding control controlled volumes to the chamber (2) and a second rotatable axial flow positive displacement device (1c) comprising two double helical rotors from removing fluid from the chamber (2) at the same rate at which it is fed, and pairs of rotors, one in each axial flow positive displacement device, are fixed to rotatably mounted shafts (3) which are parallel to one another.

According to a further aspect of the invention there is provided a method of determining the mass flow of multi-phase fluid which comprises feeding the multi-phase fluid into a chamber through a positive displacement device, measuring the density of the fluid in the chamber with a radiation densitometer, measuring the number of volume increments passing through the positive displacement device, and determining the mass flow passed through the device from the number of increments passed through the device and the density of each increment characterised in that fluid is fed to the chamber by a first positive displacement axial flow device which comprises two double helical rotors and is removed from the chamber at the same volume rate as that which it is fed by a second positive displacement axial flow device, pairs of rotors, one in each axial flow positive displacement device being connected such that the rotors in the second positive displacement axial flow device rotate at the same rate as those in the first axial flow positive displacement device.

The two devices for feeding and removing fluid from the measurement chamber are positive displacement devices. Thus fluid cannot pass through the devices unless they are allowed to rotate and the components of each increment of the fluid cannot travel at different rates through the positive displacement device. The devices are axial flow devices i.e. the fluid enters the device flowing parallel to the axis of rotation of the device. The general direction of flow in the device is parallel to the axis of rotation and thus the transient forces generated in multiphase flow are generally tangential to the rotors and do not directly impinge on them.

An example of a suitable rotating axial flow positive displacement device comprises pairs of helical meshing rotors, one in each positive displacement device, and which are fixed to rotatably mounted shafts which are parallel to one another.

The second rotating axial flow positive displacement device may be caused to remove fluid from the chamber at the rate at which it is fed by being coupled to a shaft or shafts common to the first rotating axial flow positive displacement chamber.

The density measuring device must be arranged so as to measure the average density over the confined volume. This may be achieved by moving the confined volumes past a density measuring device which is fixed.

The density of the confined volume of fluid may be determined by a radiation densitometer. Radiation densitometers, e.g. Gamma ray densitometers are well known to those skilled in the art and a detailed description of their operation is not necessary. The response time of the density measuring device used must of course be sufficient to measure the density within a period determined by the transit time of the confined volume increments through the density measurement chamber.

A single gamma ray source or a plurality of sources and detectors may be used in the gamma ray densitometer.

The apparatus may be provided with means for measuring the pressure and temperature in the chamber.

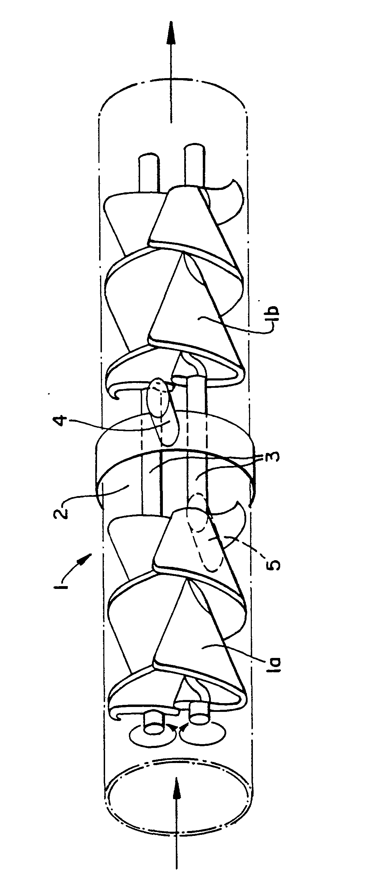

A specific embodiment of the present invention will now be illustrated by reference to the accompanying drawing which represents a three dimensional diagrammatic view of one apparatus, in accordance with the present invention. The apparatus comprises a double helical rotor type positive displacement meter in which progressing cavities are formed, displacing known volumes of fluid between the rotors.

The meshed helical rotor assembly (1) is divided into two sections (1a and 1b) separated by a cylindrical chamber (2) through which are passed the shaft(s) (3) coupling the two sections. A gamma ray source (4) is arranged to pass a beam of gamma rays across the chamber to a corresponding detector (5) on the other side.

Thus each volume increment trapped between the rotors of the entry section (1a) travels within its cavity at the same forward velocity as the previous and following increments of flow. Interphase slippage is thereby prevented. On entering the central densitometer chamber (2), unilateral acceleration of different phases in the fluid is constrained by the exit section rotors (1b) which, because they are directly synchronised with the entry rotors (1a) ensure that the velocity of the flow departing from the chamber is identical to that of the entry flow.

The gamma ray beam (4) is arranged to measure the average density of the fluid passing through the chamber taking due account of the additional density of the rotor shaft(s).

The two positive displacement devices are mounted within a tubular body which forms an inlet and an outlet. The chamber 2 is defined between the body 6 and the two positive displacement devices.

Facilities (not shown) are also provided to measure pressure and temperature within the chamber.

The mass flow passing through the device is obtained from the product of the sum of the incremental confined volumes, and the fluid density. Appropriate calculations involving the temperature and pressure measurement may be performed to obtain the volume ratio of gas to fluid at atmospheric pressure and other parameters of interest.

**Claims**

1. An apparatus for measuring multi-phase mass flow of a fluid, which apparatus comprises a positive displacement means (1a, 1b) for feeding controlled volumes of fluid to a chamber (2), said chamber having associated therewith a radiation densitometer (4), for determining the average density of the fluid in the chamber, characterised in that the positive displacement means comprises a first axial flow displacement device (1a) comprising two double helical rotors for feeding controlled volumes to the chamber (2) and a second rotatable axial flow positive displacement device (1c) comprising two double helical rotors for removing fluid from the chamber (2) at the same rate at which it is fed, and pairs of rotors, one in each axial flow positive displacement device, are fixed to rotatably mounted shafts (3) which are parallel to one another.

2. The apparatus according to claim 1 wherein the radiation densitometer is a gamma ray densitometer.

3. The apparatus according to claims 1 or 2 wherein the apparatus is provided with means for measuring the temperature and pressure in the chamber.

4. A method of determining the mass flow of multi-phase fluid which comprises feeding the multi-phase fluid into a chamber through a positive displacement device, measuring the density of the fluid in the chamber with a radiation densitometer, measuring the number of volume increments passing through the positive displacement device, and determining the mass flow passed through the device from the number of increments passed through the device and the density of each increment characterised in that fluid is fed to the chamber by a first positive displacement axial flow device which comprises two double helical rotors and is removed from the chamber at the same volume rate as that at which it is fed by a second positive displacement axial flow device, pairs of rotors, one in each axial flow positive displacement device being connected such that the rotors in the second positive displacement axial flow device rotate at the same rate as those in the first axial flow positive displacement device.

**Patentansprüche**

1. Apparat zur Messung eines mehrphasigen Masse-Stroms eines fließfähigen Mediums, mit einer Verdrängereinrichtung (1a, 1b) zur Förderung gesteuerter Volumina eines fließfähigen Mediums zu einer Kammer (2), mit der ein Strahlungsdensitometer (4) verbunden ist, zur Bestimmung der mittleren Dichte des fließfähigen Mediums in der Kammer, dadurch gekennzeichnet, daß die Verdrängereinrichtung eine erste Axial-Verdrängervorrichtung (1a) mit zwei Doppelschraubenrotoren zum Einspeisen gesteuerter Volumina in die Kammer (2) und eine zweite drehbare Axial-Verdrängervorrichtung (1b) mit zwei Doppelschraubenrotoren zum Abführen des fließfähigen Mediums aus der Kammer (2) mit der gleichen Rate, mit der es zugeführt wurde, umfaßt und daß Paare von Rotoren, jeweils einer in jeder Axial-Verdrängervorrichtung, auf drehbar montierten Wellen (3) befestigt sind, die zueinander parallel sind.

2. Apparat nach Anspruch 1, worin das Strahlungsdensitometer ein gamma-Strahlungsdensitometer ist.

3. Apparat nach den Ansprüchen 1 oder 2, worin der Apparat mit Mitteln zur Messung der Temperatur und des Druckes in der Kammer ausgestattet ist.

4. Verfahren zur Bestimmung des Masse-Stroms eines mehrphasigen fließfähigen Mediums, umfassend das Einspeisen des mehrphasigen fließfähigen Mediums in eine Kammer mittels einer Verdrängereinrichtung, die Messung der Dichte des fließfähigen Mediums in der Kammer mit Hilfe eines Strahlungsdensitometers, die Messung der Zahl der die Verdrängereinrichtung passierenden Volumen-Inkremente und die Bestimmung des durch die Vorrichtung hindurchgeflossenen Masse-Stroms aus der Zahl der die Verdrängereinrichtung hindurchgegangenen Volumen-Inkremente und der Dichte jedes Inkrements, dadurch gekennzeichnet, daß das fließfähige Medium in die Kammer mittels einer ersten Axial-Verdrängervorrichtung mit zwei Doppelschraubenrotoren eingespeist und aus der Kammer von einer zweiten Axial-Verdrängervorrichtung mit der gleichen Volumen-Rate abgeführt wird, mit der es zugeführt wurde, wobei Paare von Rotoren, jeweils einer in jeder Axial-Verdrängervorrichtung, so miteinander verbunden sind, daß die Rotoren in der zweiten Axial-Verdrängervorrichtung mit der gleichen Geschwindigkeit rotieren wie diejenigen in der ersten Axial-Verdrängervorrichtung.

**Revendications**

1. Appareil pour mesurer un débit massique multiphase d'un fluide, appareil qui comporte des moyens (1a, 1b) de déplacement positif pour amener des volumes contrôlés de fluide dans une chambre (2), un densitomètre à radiation (4) étant associé à ladite chambre, pour déterminer la densité moyenne du fluide qui se trouve dans la chambre, caractérisé par le fait que les moyens de déplacement positif comportent un premier dispositif (1a) à déplacement positif et écoulement axial comprenant deux rotors hélicoïdaux doubles pour amener les volumes contrôlés dans la chambre (2), ainsi qu'un second dispositif (1c) à déplacement positif et écoulement axial comprenant deux rotors hélicoïdaux doubles pour extraire le fluide hors de la chambre (2) au même débit que celui auquel il a été amené, et par le fait que les paires de rotors, une dans chaque dispositif à déplacement positif et à écoulement axial, sont fixées à des arbres (3) qui sont montés avec liberté de rotation et sont parallèles l'un à l'autre.

2. Appareil selon la revendication 1, dans lequel le densitomètre à radiation est un densitomètre à rayons gamma.

3. Appareil selon la revendication 1 ou 2, dans lequel l'appareil comporte des moyens pour mesurer la température et la pression dans la chambre.

4. Procédé pour déterminer le débit massique d'un fluide multiphase, consistant à amener le fluide multiphase dans une chambre par l'intermédiaire d'un dispositif à déplacement positif, à mesurer la densité du fluide qui se trouve dans la chambre avec un densitomètre à radiation, à mesurer le nombre d'incréments de volume passant à travers le dispositif à déplacement positif, et à déterminer le débit massique passé à travers le dispositif à partir du nombre d'incréments passés à travers le dispositif et de la densité de chaque incrément, caractérisé par le fait que le fluide est amené dans la chambre par un premier dispositif à écoulement axial et déplacement positif qui comprend deux rotors hélicoïdaux doubles et qu'il est extrait de la chambre, au même débit volumique que celui auquel il a été amené, par un second dispositif à écoulement axial et déplacement positif, les paires de rotors, une dans chaque dispositif à déplacement positif et écoulement axial, étant reliées de façon telle que les rotors qui se trouvent dans le second dispositif à écoulement axial et déplacement positif tournent à la même vitesse que ceux qui se trouvent dans le premier dispositif à déplacement positif et écoulement axial.